# EUROPEAN PATENT APPLICATION

(11) **EP 2 333 641 A2**
(43) Date of publication of application: **15.06.2011**
(21) Application number: 10194665.5
(22) Date of filing: 13.12.2010
(51) Int. Cl.: G06F 3/03

(54) **High precision optical navigation device**

(30) Priority: 14.12.2009 GB 0921798
(71) Applicant: STMicroelectronics (Research & Development) Limited, Marlow, Buckinghamshire SL7 1YL (GB)
(72) Inventor: Raynor, Jeffrey, Edinburgh, Lothian EH12 5HZ (GB)
(74) Representative: Hayden, Nicholas Mark

(57) **Abstract**

Disclosed is a handheld optical navigation device comprising: a first radiation source, and a sensor for receiving a first image based upon reflected radiation from the surface below the device, to enable a first control function based on movement across the surface and a second sensor for receiving a second image based upon reflected radiation from another object, such as a finger, and to identify movement of the object based upon the image to thereby enable a second control function. The first and second control functions co-operate so as to provide for a single navigational output. In particular the first control function may provide for coarse control and the second control function may provide for fine control.

## Description

This invention is in the field of hand held optical navigation device, and in particular to those hand held optical device commonly known as mice used for computer navigation and control.

Mice are a very common user input device for a graphical environment. These devices are hand held with the user moving the mouse with their hand, and more specifically, by twisting their wrist or moving their elbow. While this produces large amounts of movement, the human body does not have very accurate control over the relevant muscles. Furthermore, the navigation / correlation technique used in optical mice are inefficient at low speeds as there is little movement between successive images.

There have been a number of attempts to provide additional control to mice. One such attempt is the scroll wheel. These were added to mice in around 1998, providing extra control over the PC, but with usually a very coarse input, for example to scroll a whole window. The movement, and hence control, is in one direction, usually the "Y" axis. The most common implementation is a rotating wheel. There are alternative input techniques (such as the Logitech (RTM) travel mice) which implement this using a capacitive touch pad.

The functionality of the scroll wheel was improved by Microsoft (RTM) by adding a "tilt" function to the scroll wheel. This has control in the orthogonal axis to the scroll, but by only a limited amount (-X, 0 or +X). As an alternative, The Apple (RTM) "mighty mouse" replaces the scroll wheel with a trackball on the top of the mouse. This is used to provide functionality similar to the tilt wheel, i.e. horizontal scrolling. Probably due to its small size, it is not good enough to be used as a main cursor control device.

For some applications (e.g. gaming) high speed is desirable. For a lot of other applications (e.g Computer Aided Design (CAD), image drawing etc.) very precise operation at low speed is desirable. It is an object of the present invention to address one or more of these issues.

In a first aspect of the invention there is provided a handheld optical navigation device comprising:
a first radiation source capable of producing a beam of radiation onto a surface below said device; and
a first sensor for receiving a first image based upon reflected radiation from said surface, and to identify movement of said device based upon said image to thereby enable a first control function;
a second sensor for receiving a second image based upon reflected radiation from an object other than said surface and to identify movement of said object based upon said image to thereby enable a second control function,
wherein said first and second control functions co-operate so as to provide for a single navigational output.

Said device may comprise a second radiation source for producing a beam of radiation onto said object so as to obtain said second image. Said device may comprise a mousing surface, said second sensor imaging movement of said object on said mousing surface. Said device may be designed such that said mousing surface is easily manipulated by a finger or thumb.

Said device may further comprise an optical element including at least one frustrated total internal reflection (F-TIR) surface capable of causing frustrated total internal reflection of the beam of radiation when said object contacts said mousing surface of said optical element, to thereby generate said second image. The optical element may comprise at least one further surface for directing radiation from the radiation source to at least one F-TIR surface. The optical element may comprise at least one additional surface for directing radiation from the F-TIR surface to the second sensor. Said optical element may be formed from a single piece construction.

Said first sensor and said second sensor may both share a single substrate.

Said device may comprise a controller for controlling said first and second sensors and said radiation source. The device may comprise separate control lines, motion lines and shutdown lines connecting the controller independently to each of said first and second sensor, said motion line for signalling if a sensor has detected movement and said shutdown line for enabling the controller to power down a sensor. Alternatively, said controller and said first and second sensors may be connected in series such that said controller has direct control, motion and shutdown lines to only one of said sensors. In another alternative, said device may comprise an additional control line such that the control pins of said first and second sensors are connected in parallel to a single controller pin.

Said device may be operable such that for high speed operation, data from said first sensor is used, and for high precision operation, data from said second sensor is used. Said device may be operable such that should a parameter related to the speed of movement of said device across said surface indicate speed above a threshold, data from said first sensor is used for said control function and should said parameter related to the speed of movement of said device across said surface indicate speed below said threshold data, data from said second sensor is used for said control function. Said device may be operable such that said second sensor is deactivated when not being used for deriving the control function.

Said device may be operable such that said second sensor is less sensitive to movement than said first sensor. The output resolution of said first sensor may be larger than the output resolution of said second sensor.

### BRIEF DESCRIPTION OF THE DRAWINGS

Embodiments of the invention will now be described, by way of example only, by reference to the accompanying drawings, in which:
Figure 1 shows a prior art mouse device;
Figure 2 shows a mouse device according to an embodiment of the invention;
Figure 3 shows a mouse device according to a further embodiment of the invention;
Figure 4 shows a first system architecture for a mouse device according to an embodiment of the invention;
Figure 5 shows a second system architecture for a mouse device according to an embodiment of the invention;
Figure 6 shows a third system architecture for a mouse device according to an embodiment of the invention;
Figure 7 shows a plot of the speed of the mouse as detected by the down-facing sensor against its actual speed; and
Figure 8 shows a plot of the speed of the mouse as detected by the up-facing sensor against its actual speed.

### DETAILED DESCRIPTION OF THE EMBODIMENTS

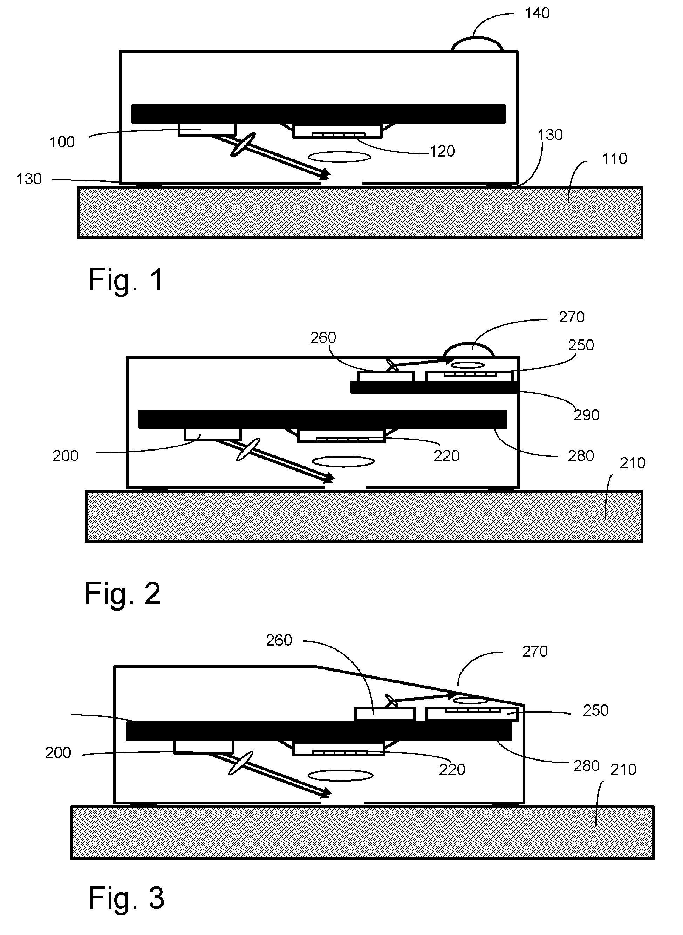

Figure 1 shows the cross section of a typical optical mouse. Shown is a light source (LED or VCSEL) 100 from which light is directed / focussed onto an object (table, desk, paper, mouse mat) 110 and the resulting image observed on an optical sensor 120 which tracks movement. Typically there are low-friction pads 130 mounted on the optical mouse to reduce friction and allow the mouse to move smoothly over the surface. Typically there are one or more buttons on the top of the mouse (not shown), and usually a scroll wheel or tilt wheel 140.

Figure 2 shows a cross section of a mouse device according to one embodiment of the invention. The difference between this and the mouse of Figure 1 is the addition of a second optical sensor unit 250 and associated light source 260. Preferably the "Mousing surface" 270 provided by this second sensor arrangement 250, 260 is positioned directly underneath the position of the index finger when it is in a relaxed or comfortable state. Consequently the sensor unit 250 will receive an image based on light reflected off an object, such as a finger, on the mousing surface 270. The first optical sensor 220 and light source 200 are located on a first, main substrate (printed circuit board, PCB) 280. The second optical sensor (and associated light source) is mounted on a second substrate (PCB) 290.

As an alternative to the arrangement depicted, the mousing surface could be on a side of the device (with a plane approximately perpendicular to that depicted) for manipulation by a thumb.

Figure 3 shows an improved mouse from that of Figure 2. By careful design of the mouse housing, the second optical sensor 250 and associated light source 260 has been mounted on the same substrate 280 as the first optical sensor 220. This reduced the thickness, provides greater comfort to the user and also decreases the manufacturing cost.

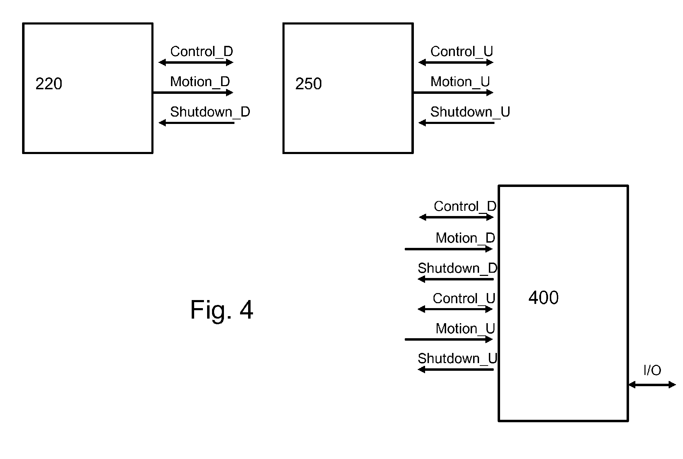

Figure 4 illustrates one of a number of implementing architectures according to an embodiment of the invention. It shows the first motion sensor (looking down) 220, the second motion sensor (looking up) 250 and the controller 400, which may be a 12C or SPI or similar control interface. In particular the connections of the "control", "Motion" (used to signal if the sensor has detected movement) and (optionally) "Shutdown" (used by a host to power down a sensor to save energy) pins are shown for the sensors 220, 250 and controller 400. In this example "Motion" and "shutdown" are independently connected to the controller device 400. The output from the controller 400 is preferably a USB (universal serial bus) output or may even be a signal suitable for RF (radio frequency) modulation, in the case of a wireless mouse. The disadvantage of this system is the extra wires and input pins required add to the complexity and cost of the mouse.

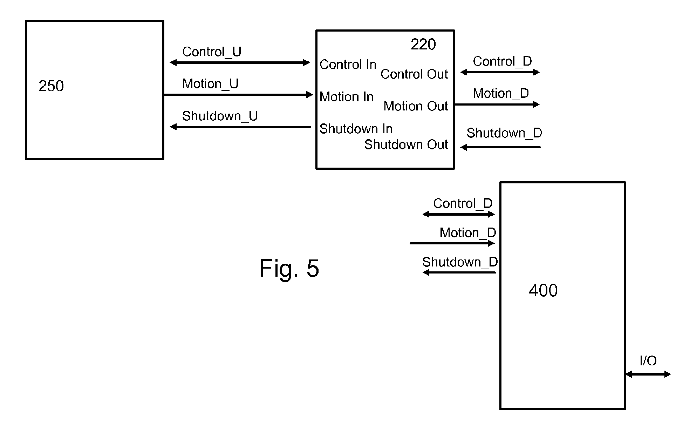

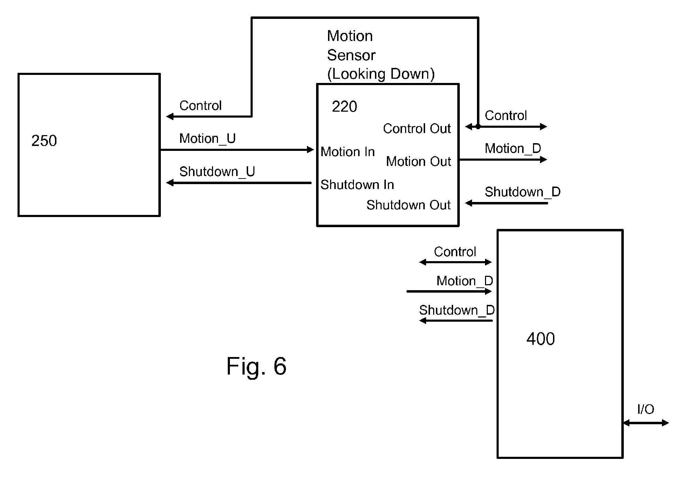

Figure 5 shows an optimized system where the controller device 400 is connected to only one sensor 250. Due to size constraints the down-facing sensor {desk} 250 has more space available than the up-facing {finger} sensor 220. Therefore, the down-facing sensor 250 would typically receive the inputs from the up-facing sensor 220 and modify / relay these to the controller 400. In the arrangement of Figure 4 the decision to use either the down-facing sensor or up-facing sensor is made by the controller device 400. In the arrangements of Figures 5 & 6, the up facing sensor 220 would be programmed (typically via the control interface) with the speed threshold and the switching between the sensors being made by up facing sensor 220.

Figure 6 shows a more efficient system architecture which may be possible, depending on the control bus uses. For example, if an 12C bus is used, there is no need to have a control input on the down-facing sensor 220, thus dispensing with the need of two extra pads / connections on the device. Furthermore the 12C bus supports multiple (slave) devices, which means that the two sensors 220, 250 can be connected in parallel.

In a main embodiment, the device operates by using the two control signals from the two optical sensors in a co-operative manner so as to output a single navigation output. For large movements and high speed operation, the mouse itself is moved across the surface below it, and motion data from the down-facing sensor 220 is used. For high precision movements, the mouse is kept largely stationary and the finger (typically index) is moved over the mousing surface 270 of the device. As the human body possesses fine motor control on the fingers, this operation results in a device which provides increased accuracy control. In order to best achieve this operation, data from the down facing sensor 220 should be ignored for the purposes of control when the mouse is largely stationary, or its speed is below a threshold level.

As said above, the output from the two sensors provides for a single navigational output. This is as opposed to an output that comprises two separate positional signals as is the case with a mouse and scroll wheel, where the mouse controls a cursor and the scroll wheel controls the scrolling in a window.

In the present embodiment the two control signals would, for example, control the same cursor, providing a coarse control and fine control of the cursor. Clearly, control is not limited to that via a cursor, and the control method could be any other suitable method, including scroll, zoom etc.

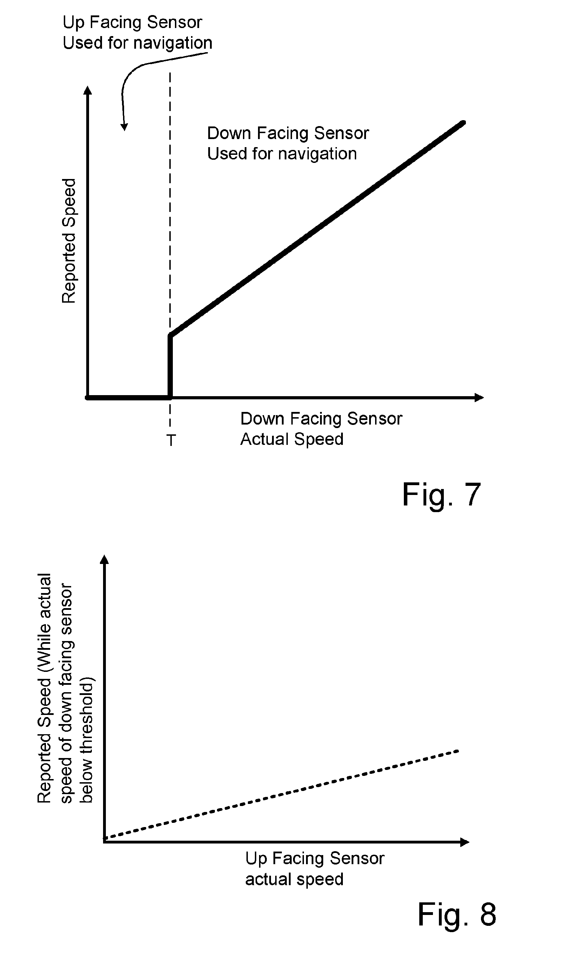

Figure 7 shows a plot of the speed of the mouse as detected by the down-facing sensor 220 against its actual speed for a mouse configured in this way. When the detected speed of the mouse is above a certain threshold T (e.g. 2-5mm/sec), the navigation data from the down-facing sensor 220 is used, and the reported speed increases linearly with increase in actual speed (Of course, this relationship does not need to continue in a linear fashion but instead may "accelerate" as is known in the art). During this second period, data from the up facing sensor 250 is being ignored, and the sensor 250 and corresponding light source 260 may in fact be switched off.

When the speed drops below the threshold T, the data from the down-facing sensor 220 is disregarded and the reported speed drops to zero (first period on graph). During this period data from the up-facing sensor 250 is used instead. This technique avoids small nudges in the mouse when a user is sliding a finger on the top surface from being used as valid cursor movement data.

Optionally, the output resolution (counts per inch) from the two sensors can be made different, such that the down-facing sensor outputs 800 cpi (i.e. one inch of travel outputs 800 counts) while the up facing sensor outputs 200 cpi. Therefore, in the latter case, the finger has to move further to output the same number of counts. This decrease of sensitivity increases the positional accuracy of the system. The different output counts may be achieved either by changing the motion gain on the sensor or by varying the magnification in the optics (x0.₅ Vs x0.2₅) or by using sensors with different array sizes (20^{*}20 pixels Vs 40^{*}40 pixels).

Figure 8 shows a graph similar (axes are scaled the same) to that of Figure 7 for the up facing sensor 250 during the first period of graph 7. It can be seen that the reported speed increases linearly with actual speed of the finger on the sensor, but with a different slope than that of Figure 7, representing the difference in output resolution. Of course, the reported speed on this graph drops to zero should the mouse speed recorded by the down facing sensor 220 pass the threshold value T.

It should be noted that the output from a mouse is rarely actual "speed", but is usually measured in counts. The speed is deduced by the controller, PC or mobile phone handset by monitoring the speed and time, (i.e. speed = distance / time). Speed is used on Figures 7 and 8 as it clearly explains the operation of the device.

The above embodiments are for illustration only and other embodiments and variations are possible and envisaged without departing from the spirit and scope of the invention.

## Claims

1. A handheld optical navigation device comprising:
a first radiation source capable of producing a beam of radiation onto a surface below said device; and
a first sensor for receiving a first image based upon reflected radiation from said surface, and to identify movement of said device based upon said image to thereby enable a first control function;
a second sensor for receiving a second image based upon reflected radiation from an object other than said surface and to identify movement of said object based upon said image to thereby enable a second control function,
wherein said first and second control functions co-operate so as to provide for a single navigational output.

2. A device as claimed in claim 1 comprising a second radiation source for producing a beam of radiation onto said object so as to obtain said second image.

3. A device as claimed in any preceding claim being operable such that for high speed operation, data from said first sensor is used, and for high precision operation, data from said second sensor is used.

4. A device as claimed in claim 3 being operable such that should a parameter related to the speed of movement of said device across said surface indicate speed above a threshold, data from said first sensor is used for said control function and should said parameter related to the speed of movement of said device across said surface indicate speed below said threshold data, data from said second sensor is used for said control function.

5. A device as claimed in claim 4 being operable such that said second sensor is deactivated when not being used for deriving the control function.

6. A device as claimed in any preceding claim being operable such that said second sensor is less sensitive to movement than said first sensor.

7. A device as claimed in claim 6 wherein the output resolution of said first sensor is larger than the output resolution of said second sensor.

8. A device as claimed in any preceding claim comprising a mousing surface, said second sensor imaging movement of said object on said mousing surface.

9. A device as claimed in any preceding claim being specifically configured such that said mousing surface is easily manipulated by a finger or thumb.

10. A device as claimed in any preceding claim comprising an optical element including at least one frustrated total internal reflection (F-TIR) surface capable of causing frustrated total internal reflection of the beam of radiation when said object contacts said mousing surface of said optical element, to thereby generate said second image.

11. A device as claimed in claim 10 wherein the optical element comprises at least one further surface for directing radiation from the radiation source to at least one F-TIR surface and at least one additional surface for directing radiation from the F-TIR surface to the second sensor.

12. A device as claimed in any preceding claim wherein said first sensor and said second sensor both share a single substrate.

13. A device as claimed in any preceding claim comprising a controller for controlling said first and second sensors and said radiation source.

14. A device as claimed in any preceding claim comprising separate control lines, motion lines and shutdown lines connecting the controller independently to each of said first and second sensor, said motion line for signalling if a sensor has detected movement and said shutdown line for enabling the controller to power down a sensor.

15. A device as claimed in any of claims 1 to 13 wherein said controller and said first and second sensors are connected in series such that said controller has a direct control, motion and shutdown line to only one of said sensors, said motion line for signalling if a sensor has detected movement and said shutdown line for enabling the controller to power down a sensor.

16. A device as claimed in claim 15 comprising an additional control line such that the control pins of said first and second sensors are connected in parallel to a single controller pin.
